# EUROPEAN PATENT SPECIFICATION

(11) **EP 3 085 592 B1**
(45) Date of publication and mention of the grant of the patent: **30.08.2017**
(21) Application number: 16166752.2
(22) Date of filing: 22.04.2016
(51) Int. Cl.: B60W 10/02, B60W 10/04, B60W 10/10, B60W 10/18, B60W 30/14, B60W 30/18, B60K 26/02, B60K 20/02, B60T 7/02, F16H 59/04, F16H 59/08, B60K 26/00, B60W 50/08, B60W 10/06, B60W 10/11, B60W 10/184, B60W 30/17

(54) **DRIVER ASSISTANCE DURING TAILBACKS OR SLOW TRAFFIC**
FAHRERASSISTENZ WÄHREND STAUS ODER LANGSAMEM VERKEHR
ASSISTANCE AU CONDUCTEUR LORS DE CIRCULATION RALENTIE OU D'EMBOUTEILLAGE

(30) Priority: 23.04.2015 IT UB20150361
(43) Date of publication of application: 26.10.2016
(73) Proprietor: FCA Italy S.p.A., 10135 Torino (IT)
(72) Inventor: ANNE', Luca, 10135 TORINO (IT)
(74) Representative: Bergadano, Mirko

(56) References cited:
- EP-A2- 2 682 297
- DE-A1- 19 841 838
- DE-A1- 19 919 457
- DE-A1-102006 028 045
- DE-A1-102010 025 089
- US-A- 6 105 709
- US-B1- 6 820 709

## Description

### Technical background of the Invention

The present invention relates to motor vehicle driver assistance during tailbacks or slow traffic.

### State of the art

As is known, in recent years many automotive manufacturers have invested in researching motor vehicle driver assistance systems to assist motor vehicle drivers in road congestion situations (tailbacks or slow traffic) with the main objective of eliminating the continuous movement of driver's foot from the accelerator pedal to the brake pedal, thereby eliminating one of the major stress factors originating in these situations and making driving more relaxing and comfortable.

To date, systems are about to be released on the market which, with the aid of radar, video and/or ultrasonic sensors, detect and interpret the environment surrounding the motor vehicle and automatically drive the motor vehicle during tailbacks. As a semi-automatic comfort solution, these systems are based on sensors and on features of Adaptive Cruise Control (ACC) systems with Stop&Go function, and Lane Keeping Support (LKS) systems, combined with electromechanical power steering, and take over driving of the motor vehicle in the longitudinal and transverse directions, i.e. can move the motor vehicle forward, accelerate and automatically brake as well as steer autonomously, within certain limits.

When the Stop&Go function is active, the motor vehicle driver assistance system constantly analyses the speeds of the surrounding motor vehicles, comparing them with its own. If there is a situation of heavy traffic or tailbacks, the motor vehicle driver can activate the assistance system by pressing a button. From that moment, the motor vehicle will automatically follow the one in front of it, moving away, accelerating, braking and steering in the same lane. This way the assistance system can react in cases in which, for example, an emergency lane is created.

### Object and Summary of the Invention

The use of sophisticated radar, video and/or ultrasound sensors, as well as adaptive cruise control (ACC) systems with Stop-and-Go function and lane keeping support (LKS) systems as well as electromechanical steering, makes the above-described motor vehicle driver assistance systems considerably expensive and, therefore, suitable for installing only on top-of-the-range motor vehicles, where the difference of a few thousand euros fails to significantly affect the final price of the motor vehicle.

Moreover, the fact that these driver assistance systems intervene directly in the driving of the motor vehicle, completely excluding the motor vehicle driver from control of the motor vehicle and thus *de facto* implementing an 'automatic pilot' in a situation of slow traffic and low speed, could be a distracting factor for the motor vehicle driver, thus making these systems, in certain situations, potentially dangerous.

The need is therefore felt to develop a motor vehicle driver assistance system which, on the one hand, allow the manufacturing costs of motor vehicle driver assistance systems to assist motor vehicle drivers during slow traffic or tailbacks to be reduced, so as to make this technology commercially utilisable even on low-middle range motor vehicles and, on the other, which in any case represents an intermediate step between the *status quo ante,* in which this technology was completely absent, and the above-described sophisticated motor vehicle driver assistance systems, where the motor vehicle driver finds himself entirely in the hands of technology.

This technology is the subject of extensive patent literature including, among others, DE 198 41 838 A1, DE 10 2010 025089 A1, DE 10 2006 028045 A1, DE 199 19 457 A1, US 6,105,709 A, US 2011/130939 A1 and EP 682 297 A2.

In particular, DE 10 2006 028045 A1 discloses an automotive electronically-shifted transmission comprising a gear shifting unit provided with a gearshift lever biasedly movable to allow a driver to select functions of a driver assistance system during movement into one shifting lane, and other drive positions (D, N, R) during movement into a different shifting lane.

Driver-selectable functions of the driver assistance system comprise sport and conform driving, vehicle speed and/or distance control, and set and resume functions associated with the vehicle speed control function to allow a current vehicle speed or a previously stored vehicle speed to be set as vehicle control speed for the vehicle speed control function.

Furthermore, when the set function is selected, the vehicle control speed set for the vehicle speed control function may be increased or decreased step by step of a given amount, e.g., 10 Km/h, by bringing the gearshift lever in a predetermined central neural position and then by moving the gearshift lever in opposite directions from the central neutral position, similarly to what is to be done to upshift and downshift the gears.

The Applicant has noted that the solutions proposed in the above-listed patent literature, although appearing able to provide the motor vehicle driver with satisfactory assistance in driving the motor vehicle during tailbacks or slow traffic, also seem to be lacking intuitiveness as regards activation of the motor vehicle driver assistance function during situations of tailback or slow traffic.

The object of the present invention is therefore to provide a solution that is simple and intuitive and which allows the cost of this technology to be reduced in such a way as to also make it commercially utilisable on medium-lower category motor vehicles.

According to the present invention, an automotive electronic control system is provided, as claimed in the appended claims.

### Brief description of the drawings

Figure 1 shows a block diagram of an automotive electronic control system for controlling an automotive powertrain and an automotive braking system and configured to implement a motor vehicle driver assistance function during tailbacks or slow traffic according to the present invention;
Figure 2 shows time developments of engine and vehicle speeds during motor vehicle driver assistance in tailbacks or slow traffic;
Figures 3 and 4 show possible shift patterns of an automotive gear lever to implement the motor vehicle driver assistance function during tailbacks or slow traffic according to the present invention; and
Figures 5 and 6 show two graphical representations which may be displayed on an automotive display to signal the operation of the motor vehicle driver assistance function during tailbacks or slow traffic according to the present invention.

### Detailed Description of Preferred Embodiments of the Invention

The present invention will now be described in detail with reference to the attached figures to enable a person skilled in the art to embed and use it. Various modifications to the embodiments described will be immediately apparent to the persons skilled in the art and the general principles described may be applied to other embodiments and applications while remaining within the scope of protection of the present invention, as defined in the appended claims. As a result, the present invention should not be considered limited to the embodiments described and illustrated, but should be given the widest scope of protection in compliance with the principles and features herein described and claimed.

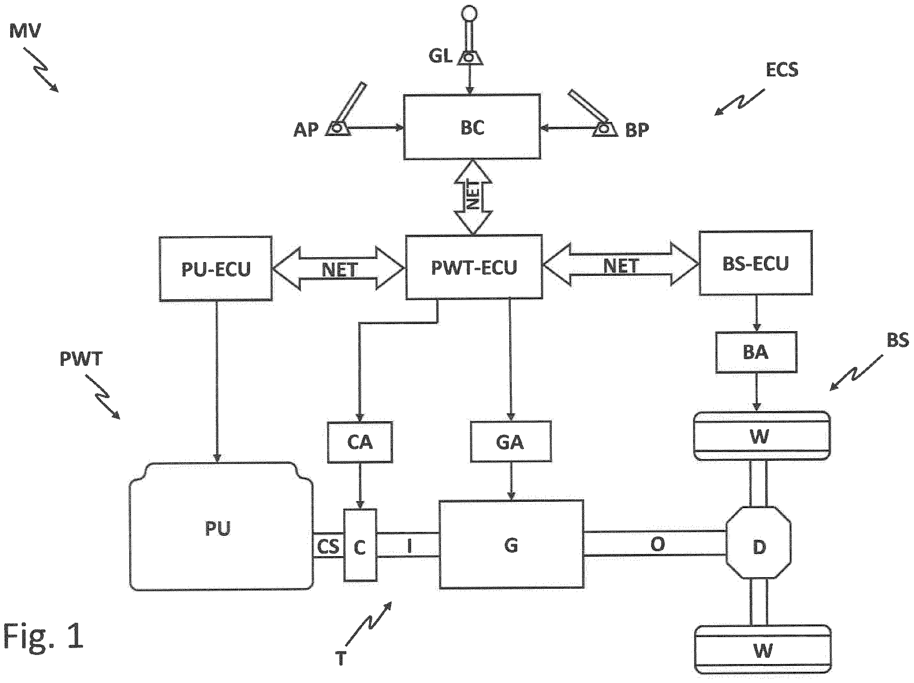

Figure 1 shows, as a non-limiting example, a block diagram of an automotive electronic control system ECS of servo-assisted powertrain PWT and braking system BS in a motor vehicle MV.

The powertrain PWT comprises a power unit PU which can alternatively be an internal combustion engine or a hybrid engine, an output shaft CS of which is coupled to a servo-assisted transmission line T.

The transmission line T may indifferently be a single-clutch transmission line, as shown in Figure 1, or a dual-clutch transmission line (not illustrated).

When of the single-clutch type, as shown in Figure 1, the transmission line T comprises a discrete-ratio gearbox G with an input shaft I which can be coupled to the output shaft of the power unit PU via a single coupling or clutch C arranged outside the gearbox G, and an output shaft O coupled to a pair of drive wheels W via a known differential D.

The clutch C is servo-controlled by means of an associated electrically- or electro-hydraulically-operated actuator AC operable to engage and disengage the clutch C in response to an electric command.

The gearbox G is servo-controlled by means of a plurality of electrically- or electro-hydraulically-operated actuators, generally indicated as GA, operable to engage and disengage the gears corresponding to the various achievable speed ratios.

When of a double clutch type, the transmission line T comprises, instead of a single clutch C arranged outside the gearbox G, two separate clutches (not shown), one associated with the even gear ratios and the other associated with the odd gear ratios, integrated within the gearbox G.

The braking system BS is also servo-controlled by means of an associated electrically- or electro-hydraulically-operated actuator BA operable to actuate the brake member, in particular, in disc brakes, the brake calipers which act on the brake discs.

The electronic control system ECS comprises an electronic control unit PWT-ECU intended to control the powertrain PWT, an electronic control unit PU-ECU intended to control the power unit PU, and an electronic control unit BS-ECU intended to control the braking system BS, which electronic control units are connected to each other by an automotive on-board communication network NET, for example CAN, FlexRay or the like.

The electronic control system ECS further comprises a body computer BC connected to the electronic control unit PWT-ECU via the on-board communication network NET and programmed to receive quantities indicative of operating conditions of on-vehicle systems/components, such as the powertrain PWT, the battery/batteries, the accelerator pedal AP, the brake pedal BP, the handbrake, etc., and to control the operation of the powertrain PWT and of the braking system BS to implement a motor vehicle driver assistance function during tailbacks or slow traffic.

The powertrain PWT and the braking system BS operate in response to electrical commands from the associated electronic control units PWT-ECU, PU-ECU and BS-ECU, which are in turn controlled by the body computer BC in response to commands from the motor vehicle driver via hand-operated or foot-operated command/selection members connected to the body computer BC and comprising, among other things, an accelerator pedal AP, a brake pedal BP, and a gear lever GL.

The body computer BC and the electronic control units PU-ECU, BS-ECU and PWT-ECU of the electronic control system ECS are programmed to control the powertrain PWT and the braking system BS to implement a motor vehicle driver assistance function according to the present invention to assist the motor vehicle driver during slow traffic or tailbacks, as described further below.

It should be emphasised that, for the purposes of the present invention, only the functions performed by the body computer BC and the electronic control units PU-ECU, BS-ECU and PWT-ECU are important and not which of these entities specifically supervises the function described at the time, this being a choice of software architecture made by the automotive manufacturer. For this reason, therefore, and also for descriptive convenience, in the following description reference will be made generally to the functions performed by control software of the powertrain PWT and of the braking system BS, without specifying which entity actually supervises the individual functions.

In general terms, the driver assistance function according to the present invention essentially provides that during tailbacks or slow traffic the motion of the motor vehicle MV, both in acceleration and in deceleration, can be controlled manually by the motor vehicle driver using the gear lever GL, actuating it in specific directions, in particular opposite, conveniently forwards and backwards, starting from a central neutral position.

This way, the motor vehicle driver can accelerate and decelerate (brake) the motor vehicle MV without using the accelerator and brake pedals AP, BP, so making movements entirely similar to those made to shift gears up and down during the manual forward gear shift mode M of the transmission line T.

The motor vehicle acceleration and deceleration profiles may be calibrated as required by the automotive manufacturer by appropriately programming the control software, as well as the maximum speed which the motor vehicle MV can reach when accelerating may be limited so that it does not exceed a given speed limit, for example 8 km/h.

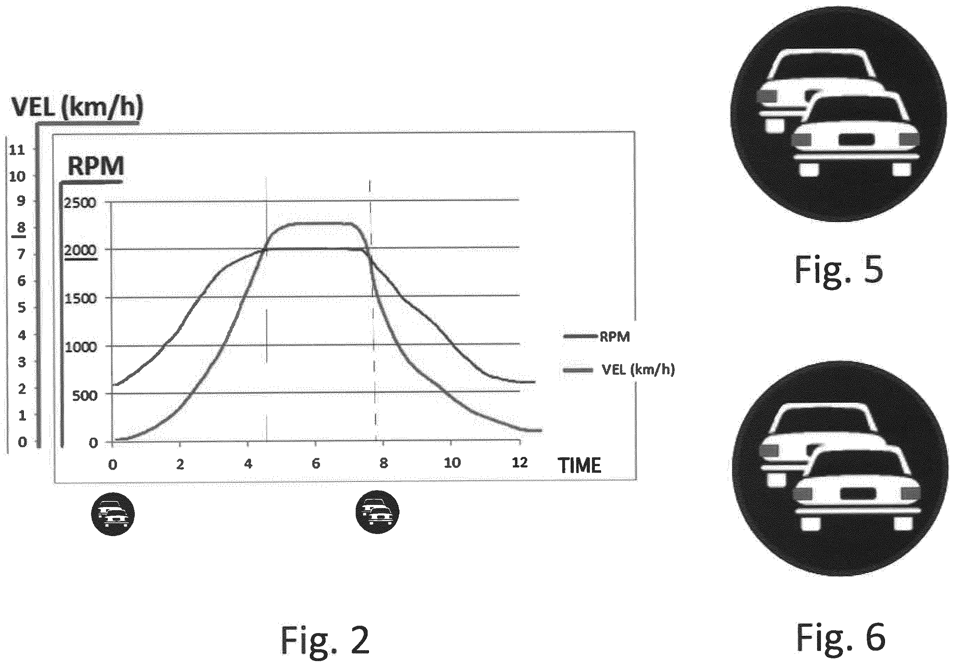

Figure 2 shows possible time developments of the engine and vehicle speeds during motor vehicle acceleration and deceleration, as well as during a stationary phase in which the vehicle proceeds at a limited speed.

With the time developments shown, the motor vehicle driver assistance function, again for the purposes of simplicity and in the aforementioned conditions of use (slow traffic / tailbacks), is based on an approach which favours fuel consumption, maintaining a slow acceleration curve and the first gear engaged (namely, conveniently without changing gear) that reaches a maximum speed (calibrated and possibly constant if prolonged) to allow a short move ahead remaining at a low engine speed, and, also, with the braking set not to be abrupt or too slow with respect to the speed reached.

The motor vehicle driver assistance function is enabled by the control software only during tailbacks or slow traffic, the occurrence of which is detected by the control software on the basis of the current motor vehicle speed, in particular when this is below a calibratable threshold, for example, 8 km/h, which may be.

The motor vehicle driver assistance function may be implemented during tailbacks or slow traffic by ensuring that the gear lever GL can be moved from a rest position, normally 'D' (Drive) or 'M' (Manual), associated with a corresponding existing operating mode (automatic and semi-automatic) of the transmission line T, to a rest position associated with such function and distinct from other existing rest positions of the gear lever GL and associated with different operating modes of the transmission line T, that is to say separate from the rest positions 'D' and 'M', and thus enabling the gear lever GL to be actuated in opposite directions with respect to the rest position.

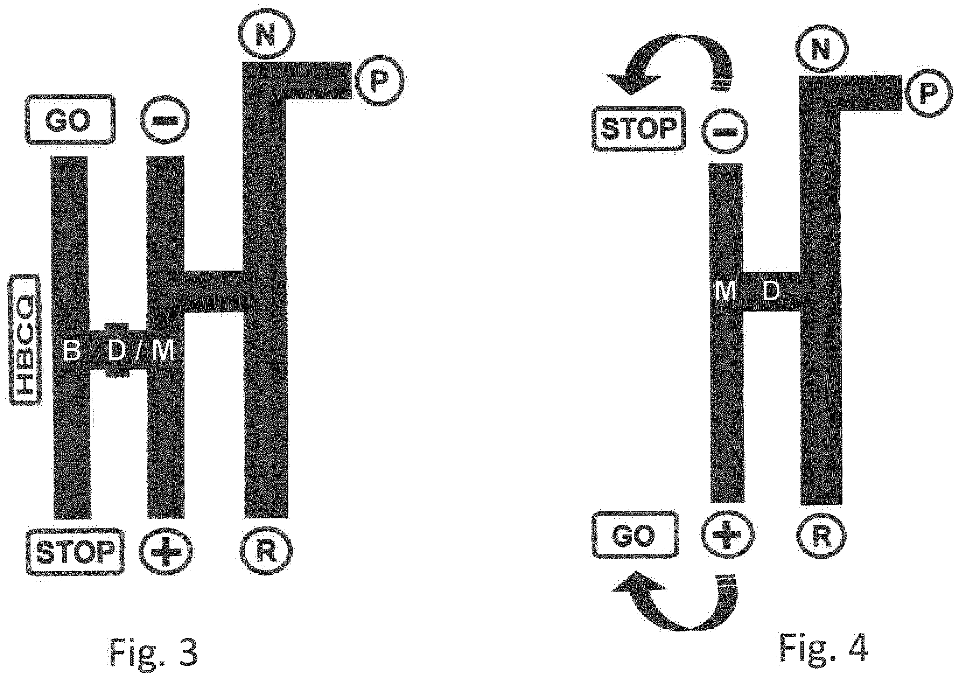

Figure 3 shows a possible shift pattern which may be assumed by a gear lever GL to implement the motor vehicle driver assistance function during tailbacks or slow traffic.

As may be seen in Figure 3, in addition to the conventional positions 'D', 'M', 'N', 'P' and 'R' and the conventional operating directions '+' and '-' of the gear lever GL, which allow operation of the transmission line T according to the conventional automatic and semi-automatic operating modes, an additional rest position is also represented, indicated by the letter 'B', which is associated with the motor vehicle driver assistance function during tailbacks or slow traffic, distinct from the other conventional positions which the gear lever GL can assume, and which can be reached by moving the gear lever GL transversely, i.e. in a direction perpendicular to the longitudinal direction of the motor vehicle MV.

Furthermore, as shown in Figure 3, starting from the rest position 'B' the gear lever GL can be moved in two further longitudinal directions, forward and backward, respectively, indicated by 'GO' and 'STOP', opposite each other and perpendicular to the direction in which the gear lever GL is moved to adopt the rest position 'B'.

The motor vehicle driver assistance function during tailbacks or slow traffic is automatically activated by the control software when both the conditions indicated below are met:
a) the motor vehicle driver assistance function in tailbacks or slow traffic is enableable, namely the current motor vehicle speed is determined to be lower than a calibratable threshold speed, and
b) a selection member operable to select the motor vehicle driver assistance function during tailbacks or slow traffic is determined to have been operated by the motor vehicle driver.

Conveniently, the selection member is in the form of a selection button ergonomically arranged inside the motor vehicle so as to be easily reached by the motor vehicle driver, for example arranged on the steering wheel or on the dashboard, or even close to, or on, the gear lever GL.

To implement the motor vehicle driver assistance function, the control software is further designed to detect the shift of the gear lever GL into the rest position 'B', and the shifts of the gear lever GL forward, i.e. towards the 'GO' position, and backward, towards the 'STOP' position, starting from the rest position 'B', in response to which the motor vehicle MV is accelerated and, respectively, decelerated (braked).

In particular, in response to detection of the shift of the gear lever GL to the 'GO' position, the control software appropriately controls the powertrain PWT and the braking system BS so as to cause the acceleration of the motor vehicle MV according to a stored acceleration profile, conveniently imparting a constant acceleration up to reaching a maximum, stored speed such as 8 km/h.

Depending on the acceleration profile adopted and the maximum speed that the motor vehicle MV is desired to reach, during the acceleration phase an appropriate gear change profile can then be implemented favouring comfort or fuel consumption, the most basic version of which may be simply represented by the use of the first gear up to the maximum speed.

In response instead to detection of the shift of the gear lever GL toward the 'STOP' position, the control software appropriately controls the powertrain PWT and the braking system BS so as to decelerate the motor vehicle MV according to a stored deceleration profile, for example, imparting a constant deceleration until the motor vehicle comes to a complete standstill, in which it is kept braked.

In this condition, the transmission line T is disengaged and this may be achieved either by disengaging the clutch and keeping it disengaged and the gear engaged, or disengaging the gear previously engaged and then engaging the clutch or keeping it conveniently disengaged to reduce the actuation time when the motor vehicle MV is accelerated again.

In addition, the acceleration and deceleration of the motor vehicle MV may be controlled as long as the gear lever GL is kept in the 'GO' and 'STOP' positions and then immediately stopped when the gear lever GL is brought back into the rest position B, or may be controlled when the gear lever GL is temporarily shifted into the 'GO' and 'STOP' positions, continued even when the gear lever GL is shifted back into the rest position 'B', and stopped only when the gear lever GL is shifted in the opposite direction to that commanding the acceleration or deceleration.

During the acceleration and deceleration phases of the motor vehicle MV, graphical representations as those shown in Figures 5 and 6 may be displayed on a visual feedback device of the motor vehicle MV, consisting for example of an electronic display arranged in the instrument panel or by special dedicated warning lights, in which the two rear lights are coloured green and red respectively, to indicate precisely that the motor vehicle MV is accelerating and, respectively, braking.

By manually shifting the gear lever back into one of the positions 'D' (Drive) or 'M' (Manual), the motor vehicle driver assistance function is automatically deactivated by the control software.

The motor vehicle driver assistance function is also automatically deactivated when the motor vehicle driver presses either the accelerator pedal AP or the brake pedal BP. Once the function has been deactivated, the gear lever GL may be shifted automatically, through a suitable implementation, from the rest position B to the adjacent position 'D' (Drive), as in the case shown in Figure 3, thus returning the transmission T MV to automatic operation 'D' (Drive) of the transmission line T.

According to a preferred embodiment of the motor vehicle driver assistance function during tailbacks or slow traffic shown in Figure 6, the central neutral position B and the two selection positions 'GO' and 'STOP' of the gear lever GL associated with the motor vehicle driver assistance function during tailbacks or slow traffic are not separate from the others already existing on the transmission line T, but are the same as those associated with existing operating modes of the transmission line T and, in particular, are the same as those associated with the manual forward gear shift mode M of the transmission line T.

In order to make the operation of the gear lever GL as intuitive as possible, the positions of the gear lever GL marked with the signs '+' and '-' become, respectively, the 'GO' and 'STOP' positions, with '+' and 'GO' positioned rearward, in the acceleration phase, and '-' and 'STOP' positioned forward, during deceleration (braking).

In order to make the operation of the gear lever GL even more intuitive, electronic display devices are conveniently provided, for example of a LED type, which, depending on the operating mode of the transmission line T, display corresponding graphical representations, that is to say graphic signs '+' and '-' when the transmission line T is operating in semi-automatic mode (M), and the words 'STOP' and 'GO' when the transmission line T implements the motor vehicle driver assistance function during tailbacks or slow traffic.

From an examination of the characteristics of the present invention it is evident how this achieves the objectives set out.

In fact, without having to resort to expensive laser sensors, radar and cameras, as well as adaptive cruise control (ACC) systems with the Stop&Go function and lane keeping support (LKS) systems, as well as electromechanical steering, but by simple changes to what already exists, the present invention makes it possible to provide a motor vehicle driver assistance system during tailbacks or slow traffic relatively much less expensive than those currently on the market, thus making this technology commercially utilisable also on medium-lower category motor veicles.

Furthermore, the present invention is an intermediate step between the *status quo ante,* in which this type of technology was completely absent, and the sophisticated driver assistance systems currently on the market, in which the driver is finds himself entirely in the hands of technology.

Furthermore, the present invention can be integrated with ESC, Cruise Control, Start&Stop, ABS and, possibly, also with Hill-Holder systems, is particularly user-friendly, easy to activate/deactivate even in the case of an emergency and, by controlling and limiting the motor vehicle speed, has a positive effect on fuel consumption.

Lastly, it is evident that modifications and variations may be made to what has been described and shown while remaining within the scope of protection of the present invention, as defined in the appended claims. For example, the motor vehicle driver assistance function during tailbacks or slow traffic may be implemented by moving the gear lever in opposite directions different from those described and shown, although these are those most intuitive for the driver.

Lastly, the electronic control units PU-ECU, BS-ECU and PWT-ECU may be integrated into a single electronic control unit, which would be the only one to be programmed to implement the motor vehicle driver assistance function in tailbacks or slow traffic according to the invention.

## Claims

1. An automotive electronic control system (ECS) for a motor vehicle (MV) comprising servo-assisted powertrain (PWT) and braking system (BS);
the power train (PWT) comprises a power unit (PU) and a servo-assisted transmission line (T) operable in different operating modes comprising an automatic forward gear shift mode (D) and a manual forward gear shift mode (M);
the motor vehicle (MV) further comprises a gear lever (GL) mounted to assume at least a central neutral position and to be movable manually in opposite selection directions from the central neutral position to reach selection positions arranged on opposite sides of the central neutral position;
the motor vehicle further comprises a selection member manually operable to select a motor vehicle driver assistance mode to assist a motor vehicle driver during tailbacks or slow traffic;
the automotive electronic control system (ECS) is configured to:
- receive quantities indicative of operating conditions of the motor vehicle (MV), the powertrain (PWT) and the braking system (BS),
- detect operation of the gear lever (GL) and the selection member,
- automatically activate the motor vehicle driver assistance mode to assist the motor vehicle driver during tailbacks or slow traffic when the selection member is determined to have been operated and the current motor vehicle speed is determined to be lower than a given threshold speed; and
- in the motor vehicle driver assistance mode to assist the motor vehicle driver during tailbacks or slow traffic, control the motor vehicle powertrain (PWT) and braking system (BS) in response to operation of the gear lever (GL) in opposite selection directions from the central neutral position to cause the motor vehicle (MV) to accelerate and, respectively, decelerate.

2. The automotive electronic control system (ECS) according to claim 1, wherein the central neutral position and the selection directions of the gear lever (GL) correspond to those assigned to the manual forward gear shift mode (M).

3. The automotive electronic control system (ECS) according to claim 1 or 2, wherein the selection member manually operable to select the motor vehicle driver assistance mode to assist the motor vehicle driver during tailbacks or slow traffic is a button.

4. The automotive electronic control system (ECS) according to any one of the preceding claims, for a motor vehicle (MV) further comprising electronic display devices associated with the selection positions of the gear lever (GL), further configured to cause the electronic display devices to selectively display graphical representations associated with the motor vehicle driver assistance mode to assist the motor vehicle driver during tailbacks or slow traffic and different from those displayed when the motor vehicle driver assistance mode to assist the motor vehicle driver during tailbacks or slow traffic is deactivated.

5. An automotive electronic control unit (ECU) for an automotive electronic control system (ECS) and configured to cause the automotive electronic control system (ECS) to become configured as claimed in any one of the preceding claims.

6. A software loadable into an automotive electronic control unit (ECU) in an automotive electronic control system (ECS), and designed to cause, when executed, the automotive electronic control system (ECS) to become configured as claimed in any one of claims 1 to 3.

7. A motor vehicle (MV) comprising servo-assisted powertrain (PWT) and braking system (BS);
the power train (PWT) comprises a power unit (PU) and a servo-assisted transmission line (T) operable in different operating modes comprising an automatic forward gear shift mode (D) and a manual forward gear shift mode (M);
the motor vehicle (MV) further comprises a gear lever (GL) mounted to assume at least a central neutral position and to be movable manually in opposite selection directions from the central neutral position to reach selection positions arranged on opposite sides of the central neutral position;
the motor vehicle further comprises a selection member manually operable to select a motor vehicle driver assistance mode to assist a motor vehicle driver during tailbacks or slow traffic;
the motor vehicle further comprises an automotive electronic control system (ECS) according to any one of claims 1 to 3.

8. The motor vehicle (MV) according to claim 7, further comprising electronic display devices associated with the selection positions of the gear lever (GL), and wherein the electronic control system (ECS) is further configured to cause the electronic display devices to selectively display graphical representations associated with the motor vehicle driver assistance mode to assist the motor vehicle driver during tailbacks or slow traffic and different from those displayed when the motor vehicle driver assistance mode to assist the motor vehicle driver during tailbacks or slow traffic is deactivated.

## Patentansprüche

1. Automobilelektroniksteuersystem (ECS) für ein Kraftfahrzeug (MV), umfassend einen ServoAntriebsstrang (PWT) und ein Servo-Bremssystem (BS);
wobei der Antriebsstrang (PWT) eine Leistungseinheit (PU) und eine Servoübertragungsleitung (T) umfasst, die in verschiedenen Betriebsmodi betreibbar sind, darunter ein automatischer Vorwärtsgangschaltmodus (D) und ein manueller Vorwärtsgangschaltmodus (M);
wobei das Kraftfahrzeug (MV) ferner einen Schalthebel (GL) umfasst, der derart angeordnet ist, dass er zumindest eine zentrale neutrale Position einnimmt und manuell in gegenüberliegende Auswahlrichtungen von der zentralen neutralen Position zum Erreichen von Auswahlpositionen beweglich ist, die auf gegenüberliegenden Seiten der zentralen neutralen Position angeordnet sind;
wobei das Kraftfahrzeug ferner ein Auswahlelement umfasst, das zum Auswählen eines Kraftfahrzeugfahrerunterstützungsmodus zum Unterstützen des Kraftfahrzeugfahrers während Staus oder zähfließendem Verkehr manuell betreibbar ist;
wobei das Automobilelektroniksteuersystem (ECS) zu Folgendem konfiguriert ist:
- Empfangen von Mengen, die Betriebsbedingungen des Kraftfahrzeugs (MV), des Antriebsstrangs (PWT) und des Bremssystems (BS) anzeigen,
- Erkennen eines Betriebs des Schalthebels (GL) und des Auswahlelements,
- automatisches Aktivieren des Kraftfahrzeugfahrerunterstützungsmodus zum Unterstützen des Fahrers während Staus oder zähfließendem Verkehr, wenn bestimmt wird, dass das Auswahlelement betätigt wurde, und bestimmt wird, dass die aktuelle Kraftfahrzeuggeschwindigkeit niedriger als eine gegebene Kraftfahrzeuggeschwindigkeit ist; und
- im Kraftfahrzeugfahrerunterstützungsmodus zum Unterstützen des Fahrers während Staus oder zähfließendem Verkehr, Steuern des Kraftfahrzeugantriebsstrangs (PWT) und - bremssystems (BS) in Reaktion auf den Betrieb des Schalthebels (GL) in gegengenüberliegende Auswahlrichtungen aus der zentralen neutralen Position, um zu bewirken, dass das Kraftfahrzeug beschleunigt bzw. verlangsamt.

2. Automobilelektroniksteuersystem (ECS) nach Anspruch 1, wobei die zentrale neutrale Position und die Auswahlrichtungen des Schalthebels (GL) jenen entsprechen, die dem manuellen Vorwärtsgangschaltmodus (M) zugeordnet sind.

3. Automobilelektroniksteuersystem (ECS) nach einem der Ansprüche 1 oder 2, wobei das Auswahlelement, das manuell zum Auswählen des Kraftfahrzeugfahrerunterstützungsmodus zum Unterstützen des Fahrers während Staus oder zähfließendem Verkehr betreibbar ist, ein Knopf ist.

4. Automobilelektroniksteuersystem (ECS) nach einem der vorhergehenden Ansprüche, für ein Kraftfahrzeug, das ferner elektronische Anzeigegeräte umfasst, die den Auswahlpositionen des Schalthebels (GL) zugeordnet sind, ferner zum Bewirken konfiguriert, dass die elektronischen Anzeigegeräte selektiv grafische Darstellungen anzeigen, die dem Kraftfahrzeugfahrerunterstützungsmodus zum Unterstützen des Fahrers während Staus oder zähfließendem Verkehr zugeordnet sind und sich von jenen unterscheiden, die angezeigt werden, wenn der Kraftfahrzeugfahrerunterstützungsmodus zum Unterstützen des Fahrers während Staus oder zähfließendem Verkehr deaktiviert ist.

5. Automobilelektroniksteuereinheit (ECU) für ein Automobilelektroniksteuersystem (ECS), das zum Bewirken konfiguriert ist, dass das Automobilelektroniksteuersystem (ECS) gemäß einem der vorhergehenden Ansprüche konfiguriert wird.

6. Software, die in eine Automobilelektroniksteuereinheit (ECU) in einem Automobilelektroniksteuersystem (ECS) geladen werden kann und zum Bewirken ausgelegt ist, dass, wenn sie ausgeführt wird, das Automobilelektroniksteuersystem (ECS) gemäß einem der Ansprüche 1 bis 3 konfiguriert wird.

7. Kraftfahrzeug (MV), umfassend einen Servoantriebsstrang (PWT) und ein Servo-Bremssystem (BS) ;
wobei der der Antriebsstrang (PWT) eine Leistungseinheit (PU) und eine Servoübertragungsleitung (T) umfasst, die in verschiedenen Betriebsmodi betreibbar sind, darunter ein automatischer Vorwärtsgangschaltmodus (D) und ein manueller Vorwärtsgangschaltmodus (M);
wobei das Kraftfahrzeug (MV) ferner einen Schalthebel (GL) umfasst, der derart angeordnet ist, dass er zumindest eine zentrale neutrale Position einnimmt und manuell in gegenüberliegende Auswahlrichtungen aus der zentralen neutralen Position zum Erreichen von Auswahlpositionen beweglich ist, die auf gegenüberliegenden Seiten der zentralen neutralen Position angeordnet sind;
wobei das Kraftfahrzeug ferner ein Auswahlelement umfasst, das zum Auswählen eines Kraftfahrzeugfahrerunterstützungsmodus zum Unterstützen des Kraftfahrzeugfahrers während Staus oder zähfließendem Verkehr manuell betreibbar ist;
wobei das Kraftfahrzeug ferner ein Automobilelektroniksteuersystem (ECS) gemäß einem der Ansprüche 1 bis 3 umfasst.

8. Kraftfahrzeug (MV) nach Anspruch 7, ferner umfassend elektronische Anzeigegeräte, die den Auswahlpositionen des Schalthebels (GL) zugeordnet sind, und wobei das Automobilelektroniksteuersystem (ECS) ferner zum Bewirken konfiguriert ist, dass die elektronischen Anzeigegeräte selektiv grafische Darstellungen anzeigen, die dem Kraftfahrzeugfahrerunterstützungsmodus zum Unterstützen des Fahrers während Staus oder zähfließendem Verkehr zugeordnet sind und sich von jenen unterscheiden, die angezeigt werden, wenn der Kraftfahrzeugfahrerunterstützungsmodus zum Unterstützen des Fahrers während Staus oder zähfließendem Verkehr deaktiviert ist.

## Revendications

1. Système de commande électronique (ECS) automobile pour un véhicule à moteur (MV) qui comprend un groupe propulseur servo-assisté (PWT) et un système de freinage (BS) ;
le groupe propulseur (PWT) comprend une unité d'alimentation (PU) et une ligne de transmission servo-assistée (T) pouvant fonctionner dans différents modes de fonctionnement qui comprennent un mode de changement de vitesse en marche avant automatique (D) et un mode de changement de vitesse en marche avant manuel (M) ;
le véhicule à moteur (MV) comprend en outre un levier de vitesse (GL) qui est monté de manière à prendre au moins une position neutre/non en prise centrale et de manière à pouvoir être déplacé manuellement dans des directions de sélection opposées depuis la position neutre/non en prise centrale de manière à atteindre des positions de sélection qui sont agencées sur des côtés opposés de la position neutre/non en prise centrale ;
le véhicule à moteur comprend en outre un élément de sélection qui peut être actionné manuellement de manière à sélectionner un mode assistance de conducteur de véhicule à moteur pour assister un conducteur de véhicule à moteur pendant des embouteillages ou une circulation ralentie ;
le système de commande électronique (ECS) automobile est configuré de manière à :
- recevoir des grandeurs qui sont indicatives de conditions de fonctionnement du véhicule à moteur (MV), du groupe propulseur (PWT) et du système de freinage (BS) ;
- détecter l'actionnement du levier de vitesse (GL) et de l'élément de sélection ;
- activer de manière automatique le mode assistance de conducteur de véhicule à moteur pour assister le conducteur de véhicule à moteur pendant des embouteillages ou une circulation ralentie lorsque l'élément de sélection est déterminé comme ayant été actionné et que la vitesse de véhicule à moteur courante est déterminée comme étant inférieure à une vitesse de seuil donnée ; et
dans le mode assistance de conducteur de véhicule à moteur, assister le conducteur de véhicule à moteur pendant des embouteillages ou une circulation ralentie, commander le groupe propulseur (PWT) et le système de freinage (BS) du véhicule à moteur en réponse à l'actionnement du levier de vitesse (GL) dans des directions de sélection opposées par rapport à la position neutre/non en prise centrale de manière à forcer le véhicule à moteur (MV) à accélérer et, de manière respective, à décélérer.

2. Système de commande électronique (ECS) automobile selon la revendication 1, dans lequel la position neutre/non en prise centrale et les directions de sélection du levier de vitesse (GL) correspondent à celles qui sont assignées au mode de changement de vitesse en marche avant manuel (M).

3. Système de commande électronique (ECS) automobile selon la revendication 1 ou 2, dans lequel l'élément de sélection qui peut être actionné manuellement de manière à sélectionner le mode assistance de conducteur de véhicule à moteur pour assister le conducteur de véhicule à moteur pendant des embouteillages ou une circulation ralentie est un bouton.

4. Système de commande électronique (ECS) automobile selon l'une quelconque des revendications précédentes, pour un véhicule à moteur (MV) comprenant en outre des dispositifs d'affichage électroniques qui sont associés aux positions de sélection du levier de vitesse (GL), configuré en outre de manière à forcer les dispositifs d'affichage électroniques à afficher de manière sélective des représentations graphiques qui sont associées au mode assistance de conducteur de véhicule à moteur pour assister le conducteur de véhicule à moteur pendant des embouteillages ou une circulation ralentie et qui sont différentes de celles qui sont affichées lorsque le mode assistance de conducteur de véhicule à moteur pour assister le conducteur de véhicule à moteur pendant des embouteillages ou une circulation ralentie est désactivé.

5. Unité de commande électronique (ECU) automobile pour un système de commande électronique (ECS) automobile et configurée de manière à forcer le système de commande électronique (ECS) automobile à devenir configuré tel que revendiqué selon l'une quelconque des revendications précédentes.

6. Logiciel qui peut être chargé à l'intérieur d'une unité de commande électronique (ECU) automobile dans un système de commande électronique (ECS) automobile, et conçu de manière à forcer, lorsqu'il est exécuté, le système de commande électronique (ECS) automobile à devenir configuré tel que revendiqué selon l'une quelconque des revendications 1 à 3.

7. Véhicule à moteur (MV) comprenant un groupe propulseur servo-assisté (PWT) et un système de freinage (BS) ;
le groupe propulseur (PWT) comprend une unité d'alimentation (PU) et une ligne de transmission servo-assistée (T) pouvant fonctionner dans différents modes de fonctionnement comprenant un mode de changement de vitesse en marche avant automatique (D) et un mode de changement de vitesse en marche avant manuel (M) ;
le véhicule à moteur (MV) comprend en outre un levier de vitesse (GL) qui est monté de manière à prendre au moins une position neutre/non en prise centrale et de manière à pouvoir être déplacé manuellement dans des directions de sélection opposées depuis la position neutre/non en prise centrale de manière à atteindre des positions de sélection qui sont agencées sur des côtés opposés de la position neutre/non en prise centrale ;
le véhicule à moteur comprend en outre un élément de sélection qui peut être actionné manuellement de manière à sélectionner un mode assistance de conducteur de véhicule à moteur pour assister un conducteur de véhicule à moteur pendant des embouteillages ou une circulation ralentie ;
le véhicule à moteur comprend en outre un système de commande électronique (ECS) automobile selon l'une quelconque des revendications 1 à 3.

8. Véhicule à moteur (MV) selon la revendication 7, comprenant en outre des dispositifs d'affichage électroniques qui sont associés aux positions de sélection du levier de vitesse (GL), et dans lequel le système de commande électronique (ECS) est en outre configuré de manière à forcer les dispositifs d'affichage électroniques à afficher de manière sélective des représentations graphiques qui sont associées au mode assistance de conducteur de véhicule à moteur pour assister le conducteur de véhicule à moteur pendant des embouteillages ou une circulation ralentie et qui sont différentes de celles qui sont affichées lorsque le mode assistance de conducteur de véhicule à moteur pour assister le conducteur de véhicule à moteur pendant des embouteillages ou une circulation ralentie est désactivé.
